# EUROPEAN PATENT SPECIFICATION

(11) **EP 1 518 752 B1**
(45) Date of publication and mention of the grant of the patent: **23.04.2008**
(21) Application number: 04021935.4
(22) Date of filing: 15.09.2004
(51) Int. Cl.: B60Q 1/00, B60Q 1/28, B60Q 1/32, F21S 8/10, B60Q 1/26, B60Q 1/04, F21V 7/00

(54) **Vehicle lamp**
Fahrzeugleuchte
Feu de véhicule

(30) Priority: 24.09.2003 JP 2003331245
(43) Date of publication of application: 30.03.2005
(73) Proprietor: ICHIKOH INDUSTRIES, LTD., Tokyo 144-0022 (JP)
(72) Inventor: Tsuji, Hirohiko, c/o ICHIKOH INDUSTRIES, LTD., Isehara-shi, Kanagawa-ken, 259-1192 (JP)
(74) Representative: Grünecker, Kinkeldey, Stockmair & Schwanhäusser Anwaltssozietät

(56) References cited:
- EP-A- 1 150 063
- DE-A1- 10 041 591
- GB-A- 2 253 046
- US-A- 4 912 606

## Description

The present invention rotates to a vehicle lamp according to the preamble of independent claim 1. Such a vehicle lamp can be taken from the prior art document EP 1 150 063 A1.

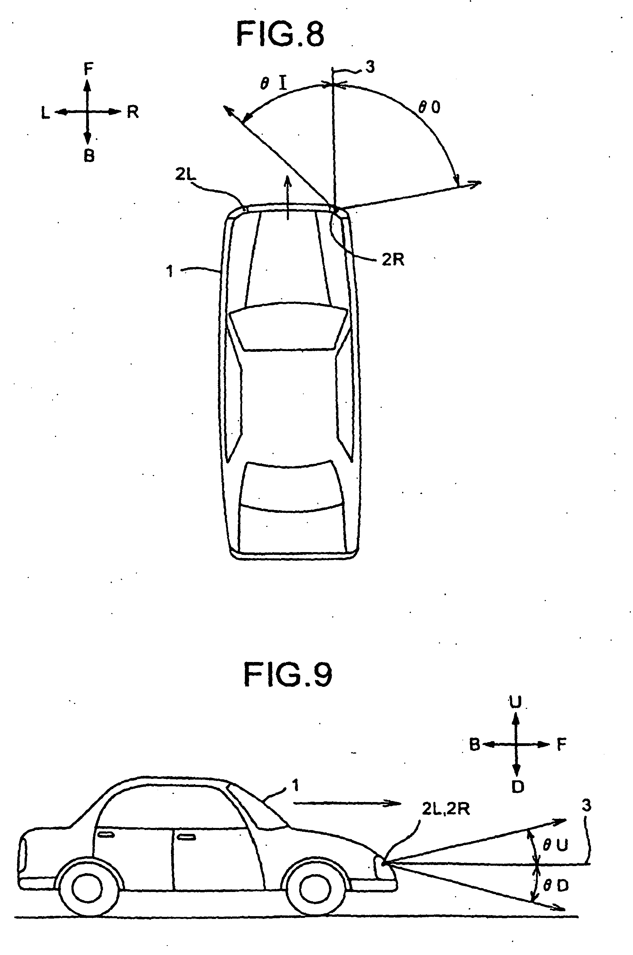

A clearance lamp is provided on the right and left sides on the front of an automobile. The clearance lamp is used as a beacon light to indicate the presence of the automobile (that is, the width and position of the automobile). Therefore, the clearance lamp needs to satisfy predetermined light distribution, as explained below with reference to Figs. 8 and 9.

In these figures, clearance lamps 2L and 2R are respectively equipped on the left and right sides on the front of an automobile 1. The light distribution of the clearance lamps 2L and 2R requires brightness in predetermined ranges, that is, in a range of a predetermined angle θI (for example, about 45 degrees) inward side I of the automobile 1, and in a range of a predetermined angle θO (for example, about 80 degrees) outward side O of the automobile 1, with respect to a reference axis 3 on a horizontal plane in Fig. 8, and in ranges of a predetermined angle θU (for example, about 15 degrees) upward side U, and of a predetermined angle θD (for example, about 15 degrees) downward side D with respect to a reference axis 3 on a vertical plane in Fig. 9.

Fig. 8 illustrates the clearance lamp 2R equipped on the right side R at the front of the automobile 1, and in Fig. 8, inward side I of the automobile 1 is the left side L, and outward side O of the automobile 1 is the right side R. On the other hand, with respect to the clearance lamp 2L equipped on the left side L at the front of the automobile 1, inward side I of the automobile 1 is the right side R, and outward side O of the automobile 1 is the left side L. Further, the reference axis 3 is substantially parallel to the centerline of the body of the automobile 1 from the bulb center of the clearance lamps 2L and 2R. In Figs. 8 and 9, the solid arrow denotes the traveling direction of the automobile 1.

Sometimes, the body design or the installation space requires that the bulbs for the clearance lamps 2L and 2R be arranged within a reflector of the headlamp. In such an arrangement, the bulbs for the clearance lamps 2L and 2R are mostly arranged near a standing wall of the reflector of the headlamp. In such a case, part of the light from the bulbs for the clearance lamps 2L and 2R may be blocked by the standing wall of the reflector, and may not be able to satisfy the light distribution of the clearance lamps 2L and 2R.

Japanese Utility Model Application Laid-Open No. H6-13005 proposes a vehicle lamp in which a reflecting surface for the clearance lamp is provided in the reflector of the headlamp. In this vehicle lamp, a part of the light from the bulb for the clearance lamp is reflected in a predetermined direction by the reflecting surface. Therefore, part of the light from the bulb for the clearance lamp, blocked by the standing wall of the reflector, can be supplemented. As a result, this vehicle lamp can satisfy the light distribution of the clearance lamps 2L and 2R.

However, in this conventional vehicle lamp, because the reflecting surface for the clearance lamp is provided in the reflector of the headlamp, a difference in level is formed between the reflector of the headlamp and the reflecting surface for the clearance lamp. Therefore, the conventional vehicle lamp becomes unattractive in appearance, and has a problem in that the light from the headlamp bulb is reflected by the difference in level to cause glare.
It is an object of the present invention to provide a vehicle head lamp as indicted above having a compact strukture.
According to the present invention said object is solved by a vehicle head lamp having the features of independent claim 1.
Preferred embodiments are laid down in the dependent claims.

Accordingly, it is provided a vehicle lamp that includes a reflector having a first standing wall provided on a side corresponding to an inward side of a vehicle, and a second standing wall provided on the side corresponding to an outward side of the vehicle; a clearance lamp that includes a bulb arranged near the first standing wall inside the reflector; a turn signal lamp that includes a bulb arranged near the second standing wall outside the reflector; and a reflecting surface that reflects the light from the bulb for the clearance lamp toward the first standing wall side. The reflecting surface is provided on a surface of the second standing wall opposite to the bulb for the clearance lamp.
Hereinafter, the present invention is illustrated and explained by means of preferred embodiments in conjunction with the accompanying drawings. In the drawings wherein:
Fig. 1 is a horizontal sectional diagram of an embodiment of a vehicle lamp according to the present teaching, and is a cross section along line I-I in Fig. 3;
Fig. 2 is a front elevation of a front combination lamp as the vehicle lamp;
Fig. 3 is a front elevation of a reflector for a headlamp;
Fig. 4 is an explanatory diagram of a reflecting state on a reflecting surface of a second standing wall, and is a cross section along line IV-IV in Fig. 3;
Fig. 5 is an explanatory diagram of a reflecting state on the reflecting surface of the second standing wall, and is a cross section along line V-V in Fig. 3;
Fig. 6 is a perspective view for explaining the configuration of the reflecting surface and knurling tools of the second standing wall;
Fig. 7 is a cross sectional diagram for explaining the configuration of the reflecting surface and the knurling tools of the second standing wall;
Fig. 8 is an explanatory diagram of a luminous region of the clearance lamp on an inward side and an outward side of an automobile; and
Fig. 9 is an explanatory diagram of a luminous region of the clearance lamp on an upward side and a downward side of the automobile.

Exemplary embodiments of a vehicle lamp according to the present teaching will be explained in detail with reference to the accompanying drawings. Note that the present teaching is not limited thereto.

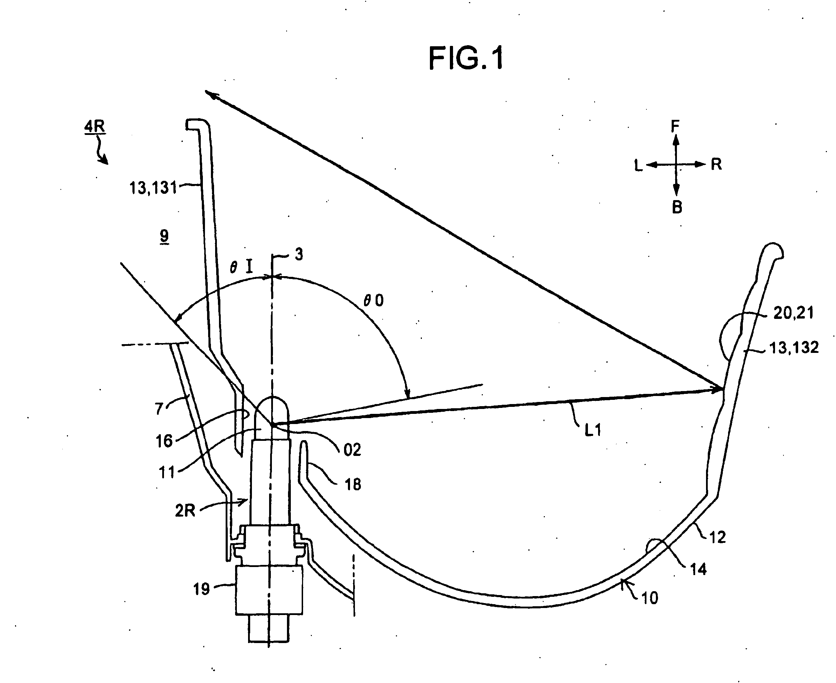

The configuration of a vehicle lamp in the embodiment will be explained first. In Figs. 1 and 2, 4R is a front combination lamp, being the vehicle lamp in the embodiment. The front combination lamp 4R is mounted on the right side R at the front of the automobile. A front combination lamp mounted on the left side L at the front of the automobile has a configuration substantially opposite to that of the front combination lamp 4R in the drawing.

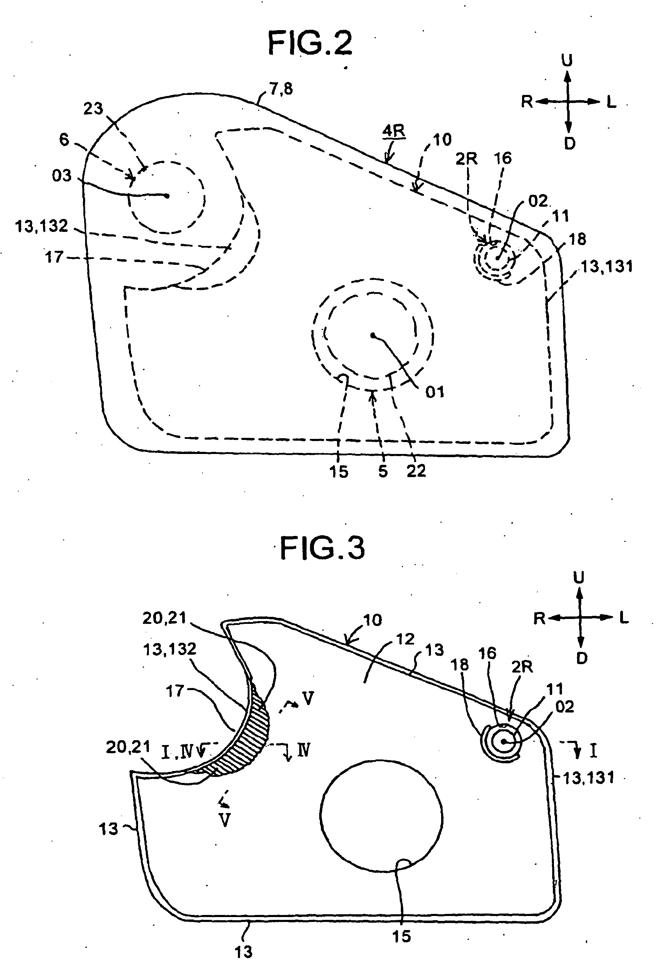

The front combination lamp 4R is obtained, as shown in Fig. 2, by combining a plurality of lamps, that is in this embodiment, a clearance lamp 2R having a function of a beacon light, a two-headlamp system or four-headlamp system5 having a function of an illuminating lamp, and a turn signal lamp 6 having a function of a signal lamp.

In the front combination lamp 4R, a lamp chamber 9 is divided into a lamp housing 7 on the front side F, and an outer lens 8, being substantially a transparent glass lens, at the back side B. In the lamp chamber 9, a reflector 10 for the headlamp 5, a bulb 22 as a light source, a bulb 11 as a light source for the clearance lamp 2R, and a bulb 23 as a light source for the turn signal lamp 6 are arranged. In Fig. 2, O1 depicts the center of the bulb 22 for the headlamp 5, 02 depicts the center of the bulb 11 for the clearance lamp 2R, and 03 depicts the center of the bulb 23 for the turn signal lamp 6.

As shown in Figs. 1 to 3, the reflector 10 has a shape of an abnormal pentagon as seen from the front. The reflector 10 includes a curved portion 12 curving toward the back side B and a standing wall 13 integrally formed therewith around the curved portion 12. The curved portion 12 and the standing wall 13 are formed based on the shape, structure, function, performance, design, manufacture, and the like of the vehicle lamp. In this example, a first standing wall 131 is provided on the side where the clearance lamp 2R of the reflector 10 is arranged, the side corresponding to the inward side I of the automobile. A second standing wall 132 is provided on the side opposite to the first standing wall 131 of the reflector 10, the side corresponding to the outward side O of the automobile. A reflecting surface 14 is provided on the inner surface (a surface opposite to the outer lens 8) of the curved portion 12, and is formed by aluminum deposition or silver coating. The reflecting surface 14 is formed of a so-called free-form surface and controls a light distribution pattern of the headlamp 5.

Substantially at the center of the curved portion 12 of the reflector 10, a circular through hole 15 for inserting and setting the bulb 22 for the headlamp 5 is provided. A small circular through hole 16 for inserting and setting the bulb 11 for the clearance lamp 2R is provided near the first standing wall 131 of the curved portion 12 of the reflector 10. Further, a relief portion 17 (a concave portion) of a quarter circle for inserting and setting the bulb 23 for the turn signal lamp 6 is provided near the second standing wall 132 of the curved portion 12 of the reflector 10.

A shielding rib 18 is integrally formed at the edge of the through hole 16 for the clearance lamp 2R. The shielding rib 18 prevents the light from the bulb 11 of the clearance lamp 2R from entering onto the reflecting surface 14 of the headlamp 5. As shown in Fig. 1, the bulb 11 for the clearance lamp 2R is detachably fitted to the lamp housing 7 via a lamp holder 19.

As shown in Fig. 1, the bulb 11 for the clearance lamp 2R is provided near the first standing wall 131 of the reflector 10 of the headlamp 5. Therefore, since a part of the light from the bulb 11 for the clearance lamp 2R is blocked by the first standing wall 131, the light distribution angle θI in the inward side I of the automobile 1 cannot be satisfied. In the vehicle lamp in the embodiment, a reflecting surface 20 for reflecting the light L1 from the bulb 11 for the clearance lamp 2R toward the first standing wall 131 side is provided on the inner surface (a surface opposite to the bulb 11 for the clearance lamp 2R) of the second standing wall 132 opposing to the first standing wall 131. In the vehicle lamp in the embodiment, a plurality of knurling tools 21 are provided in the direction of a central axis Z on the reflecting surface 20 of the second standing wall 132.

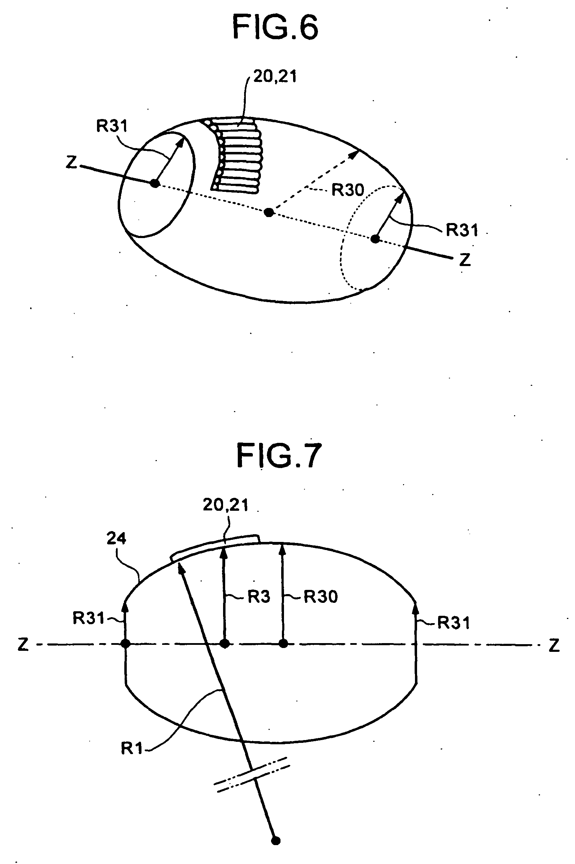

As shown in Figs. 1 to 7, the second standing wall 132 is a part of a barrel shape. That is, as shown in Figs. 6 and 7, a radius R31 from the central axis Z is the smallest at the opposite ends, the radius R30 from the central axis Z is the largest at the central part, the radius R3 from the central axis Z gradually increases from one end toward the central part and gradually decreases from the central part toward the other end, and the side 24 is formed of a part of an arc of a radius of curvature R1. The central axis Z of the barrel shape forming the second standing wall 132 is substantially parallel to the direction of pulling out a mold (not shown) for molding the reflector 10.

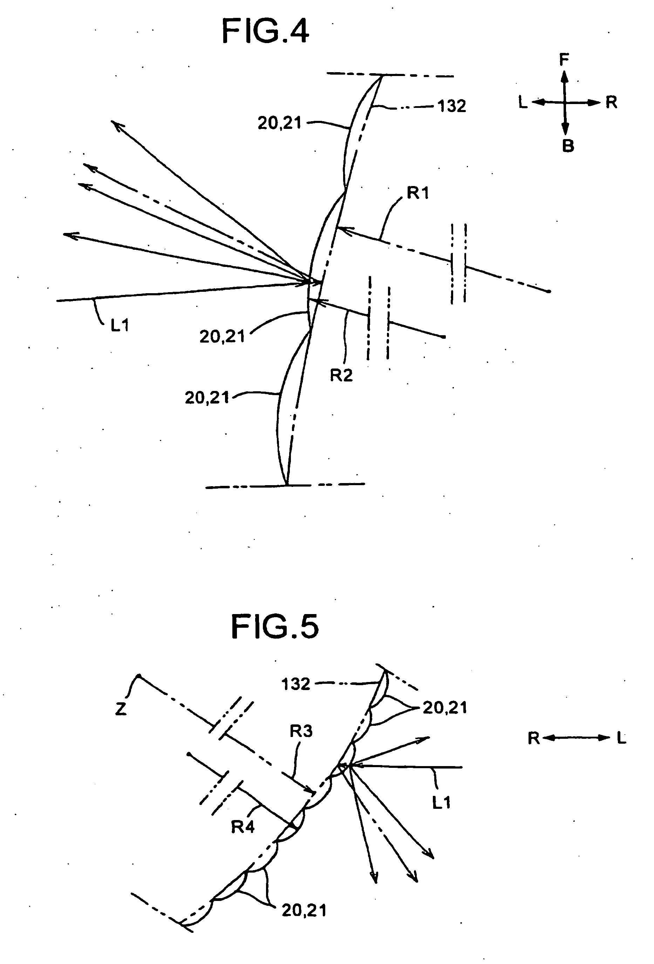

In Fig. 4, the second standing wall 132 forms a part of the arc of the radius of curvature R1 having the barrel shape, and the knurling tools 21 form a part of an arc of a radius of curvature R2. On the other hand, in Fig. 5, the second standing wall 132 forms a part of the arc of a radius of curvature R3 having the barrel shape, and the knurling tools 21 form a part of an arc of a radius of curvature R4.

An operation of the vehicle lamp in the embodiment will be explained below. When the bulb 11 for the clearance lamp 2R is lighted up, the light from the bulb 11 for the clearance lamp 2R penetrates through the outer lens 8 and is irradiated to the outside. As shown in Fig. 1, since a part of the light from the bulb 11 for the clearance lamp 2R is blocked by the first standing wall 131 of the reflector 10 of the headlamp 5, the light distribution θI in the inner side I of the automobile 1 cannot be satisfied as it is.

However, in the front combination lamp 4R, being the vehicle lamp in the embodiment, the reflecting surface 20 and the knurling tools 21, which reflect the light L1 from the bulb 11 for the clearance lamp 2R toward the first standing wall 131 side, are provided on the surface opposite to the bulb 11 for the clearance lamp 2R, of the second standing wall 132 on the side opposite to the side where the clearance lamp 2R is arranged. Therefore, in the front combination lamp 4R, being the vehicle lamp in the embodiment, as shown in Figs. 1, 4, and 5, a part of the light L1 from the bulb 11 for the clearance lamp 2R is reflected by the reflecting surface 20 on the second standing wall 132 and the knurling tools 21 toward the first standing wall 131 side. Consequently, the light from the bulb 11 for the clearance lamp 2R blocked by the first standing wall 131 is supplemented. As a result, the front combination lamp 4R, being the vehicle lamp in the embodiment, sufficiently satisfies the light distribution of the clearance lamp 2R shown in Figs. 8 and 9.

When the bulb 22 for the headlamp 5 is lighted up, the light from the bulb 22 for the headlamp 5 is reflected by the reflecting surface 14 of the reflector 10 for the headlamp 5, controlled to have predetermined light distribution, penetrates through the outer lens 8 and is irradiated to the outside. At the same time, the bulb 11 for the clearance lamp 2R is also lighted up, and the light from the bulb 11 for the clearance lamp 2R penetrates through the outer lens 8 and is irradiated to the outside, while satisfying the predetermined light distribution. Here, the light from the bulb 22 for the headlamp 5 and the light from the bulb 11 for the clearance lamp 2R are both white. Therefore, light distribution of the headlamp 5 and light distribution of the clearance lamp 2R do not cause any such harm that would occur due to a difference in the color of light.

When the bulb 23 for the turn signal lamp 6 is lighted up, the light from the bulb 23 for the turn signal lamp 6 penetrates through the outer lens 8 with predetermined light distribution and is irradiated to the outside. The turn signal lamp 6 is arranged in the relief portion 17 of the reflector 10 for the headlamp 5, isolated from the headlamp 5 and the clearance lamp 2R. Consequently, even though the light from the bulb 23 for the turn signal lamp 6 is umber, while the light from the bulb 22 for the headlamp 5 and the bulb 11 for the clearance lamp 2R are both white, the light distribution of the turn signal lamp 6, the light distribution of the headlamp 5, and the light distribution of the clearance lamp 2R do not cause any such harm that would occur due to mutual intervention of the light having different colors.

The effect of the vehicle lamp in the embodiment will be explained below. In the front combination lamp 4R, being the vehicle lamp in the embodiment, since a part of the light L1 from the bulb 11 for the clearance lamp 2R is reflected by the reflecting surface 20 on the second standing wall 132 and the knurling tools 21 toward the first standing wall 131 side, the light from the bulb 11 for the clearance lamp 2R blocked by the first standing wall 131 can be supplemented. As a result, the front combination lamp 4R, being the vehicle lamp in the embodiment, can sufficiently satisfy the light distribution of the clearance lamp 2R shown in Figs. 8 and 9. Further, the front combination lamp 4R uses the second standing wall 132, originally included in the reflector 10 for the headlamp 5, as the reflecting surface 20. Therefore, the front combination lamp 4R has a good appearance, which is not damaged by the difference in level formed between the reflecting surface of the headlamp and the reflecting surface for the reflector, and also prevents glare.

Particularly, in the front combination lamp 4R, being the vehicle lamp in the embodiment, because the knurling tools 21 are provided on the reflecting surface 20 on the second standing wall 132, the light from the bulb 11 for the clearance lamp 2R can be diffuse-reflected in the horizontal direction in a horizontal section as shown by solid line in Fig. 2. As a result, the light distribution of the clearance lamp can be satisfied more reliably. The light from the bulb 11 for the clearance lamp 2R can be also diffuse-reflected in cross sectional direction in a cross section orthogonal to the central axis Z as shown by solid line in Fig. 3. Further, though not shown, the light from the bulb 11 for the clearance lamp 2R can be also diffuse-reflected in the vertical direction in a vertical section. Since the light from the headlamp 5 is diffuse-reflected by the knurling tools 21, glare is prevented.

In the front combination lamp 4R, being the vehicle lamp in the embodiment, since the relief portion 17 is provided in the reflector 10 for the headlamp 5, a storage space for the turn signal lamp 6 is secured by the relief portion 17. As a result, the front combination lamp 4R can be made small.

An example other than the embodiment will be explained. In the vehicle lamp according to the embodiment, the clearance lamp 2R is arranged near the first standing wall 131 corresponding to the inward side I of the automobile 1, of the reflector 10 for the headlamp 5. However, the clearance lamp 2R may be optionally arranged at a position of the reflector of the headlamp, in which case, the appearance of the vehicle lamp improves due to the flexible arrangement of the clearance lamp 2R.

In the vehicle lamp according to the embodiment, the two-headlamp system or four-headlamp system5 is used for the headlamp; however, lamps other than the headlamp, for example, a fog lamp can be used.

In the vehicle lamp according to the embodiment, the turn signal lamp 6 is provided, but in the present teaching, the turn signal lamp 6 may not be provided, or another lamp may be provided.

## Claims

1. A vehicle lamp (4R) comprising:
a reflector (10) having a first standing wall (131) provided on a side corresponding to an inward side of a vehicle, and a second standing wall (132) provided on the side corresponding to an outward side of the vehicle;
a clearance lamp (2R) that includes a bulb (11) arranged near the first standing wall (131) inside the reflector (10);
a turn signal lamp (6) that includes a bulb (23)
a reflecting surface (20) that reflects the light from the bulb (11) for the clearance lamp (2R) toward the first standing wall (131) side, wherein the reflecting surface (20) is provided on a surface of the second standing wall (132) opposite to the bulb (11) for the clearance lamp (2R),
**characterized by** a headlamp (5) that includes a bulb (22) arranged at the reflector (10), wherein the tum signal lamp (6) is arranged near the second standing wall (132) outside the reflector (10) isolated from the head lamp (5) and the clearance lamp (2R).

2. A vehicle lamp (4R) according to claim 1, **characterized in that** a diffusing unit (21) that diffuses the light from the bulb (11) for the clearance lamp (2R), is provided on the reflecting surface (20).

3. A vehicle lamp (4R) according to claim 2, **characterized in that** the diffusing unit (21) is a plurality of knurling tools (21).

4. A vehicle lamp (4R) according to claim 1,**characterized in that** the second standing wall (132) forms a part of a barrel shape, with a convex surface being toward the first standing wall (131) side, to diffuse-reflect the light from the bulb (11) for the clearance lamp (2R) onto the reflecting surface (20).

5. A vehicle lamp (4R) according to claim 1, **characterised in that** the second standing wall (132) forms a part of a barrel shape, with a convex surface being toward the first standing wall (131) side, to diffuse-reflect the light from the bulb (11) for the clearance lamp (2R) on the reflecting surface (20), and
a plurality of knurling tools (21) are provided on the reflecting surface (20), to further diffuse the light from the bulb (11) for the clearance lamp (2R).

6. A vehicle lamp (4R) according to at least one of the claims 1 to 5, **characterized in that** the headlamp (5) can be one of a two-headlamp system, a four-headlamp system, and a fog lamp.

## Patentansprüche

1. Fahrzeuglampe (4R), aufweisend:
einen Reflektor (10) mit einer ersten stehenden Wand (131), angeordnet auf einer Seite, die einer Einwärts- Seite eines Fahrzeuges entspricht, und eine zweite stehende Wand (132), vorgesehen auf der Seite, die einer Auswärts- Seite des Fahrzeuges entspricht;
eine Abstandslampe (2R), die eine Glühbirne (11) enthält, angeordnet nahe der ersten stehenden Wand (131) innerhalb des Reflektors (10);
eine Richtungswechsel- Signallampe (6), die eine Glühbirne (23) enthält,
eine reflektierende Oberfläche (20), die das Licht von der Glühbirne (11) für die Abstandslampe (2R) in Richtung zu der Seite der ersten stehenden Wand (131) reflektiert, wobei die reflektierende Oberfläche (20) auf einer Oberfläche der zweiten stehenden Wand (132), gegenüberliegend zu der Glühbirne (11) für die Abstandslampe (2R) vorgesehen ist,
**gekennzeichnet durch** einen Scheinwerfer (5), der eine Glühbirne (22) enthält, angeordnet an dem Reflektor (10), wobei die Richtungswechsel- Signallampe (6) nahe der zweiten stehenden Wand (132) außerhalb des Reflektors (10) isoliert von dem Scheinwerfer (5) und der Abstandslampe (2R) angeordnet ist.

2. Fahrzeuglampe (4R) nach Anspruch 1, **dadurch gekennzeichnet, dass** eine Zerstreuungseinheit, die das Licht von der Glühbirne (11) für die Abstandslampe (2R) zerstreut, auf der reflektierenden Oberfläche (20) angeordnet ist.

3. Fahrzeuglampe (4R) nach Anspruch 2, **dadurch gekennzeichnet, dass** die Zerstreuungseinheit (21) eine Mehrzahl von Rändelungselementen (21) ist.

4. Fahrzeuglampe (4R) nach Anspruch 1, **dadurch gekennzeichnet, dass** die zweite stehende Wand (132) einen Teil einer Tonnenform bildet, mit einer konvexen Oberfläche in Richtung zu der Seite der ersten stehenden Wand (131), um das Licht von der Glühbirne (11) für die Abstandslampe (2R) auf die reflektierende Oberfläche (20) zu zerstreuen zu reflektieren.

5. Fahrzeuglampe (4R) nach Anspruch 1, **dadurch gekennzeichnet, dass** die zweite stehende Wand (132) einen Teil einer Tonnenform bildet, mit einer konvexen Oberfläche in Richtung zu der Seite der ersten stehenden Wand (131), um das Licht von der Glühbirne (11) für die Abstandslampe (2R) auf die reflektierende Oberfläche (20) zu zerstreuen zu reflektieren, und
eine Mehrzahl von Rändelungselementen (21) auf der reflektierenden Oberfläche (20) vorgesehen ist, um das Licht von der Glühbirne (11) für die Abstandslampe (2R) weiter zu zerstreuen.

6. Fahrzeuglampe (4R) nach zumindest einem der Ansprüche 1 bis 5, **dadurch gekennzeichnet, dass** der Scheinwerfer (5) einer eines Doppel-Scheinwerfersystems, eines Vierfach-Scheinwerfersystems oder einer Nebellampe sein kann.

## Revendications

1. Lampe pour véhicule (4R) comprenant :
un réflecteur (10) ayant une première paroi verticale (131) disposée sur un côté correspondant à un côté intérieur d'un véhicule, et une seconde paroi verticale (132) disposée sur le côté correspondant à un côté extérieur du véhicule ;
un feu de position (2R) qui comprend une ampoule (11) disposée près de la première paroi verticale (131) à l'intérieur du réflecteur (10) ;
un feu de direction (6) qui comprend une ampoule (23) ;
une surface de réflexion (20) qui reflète la lumière venant de l'ampoule (11) pour le feu de position (2R) vers le côté de la première paroi verticale (131), dans laquelle la surface de réflexion (20) est disposée sur une surface de la seconde paroi verticale (132) opposée à l'ampoule (11) pour le feu de position (2R),
**caractérisée par** un phare (5) qui comprend une ampoule (22) disposée au niveau du réflecteur (10), dans laquelle le feu de direction (6) est disposé près de la seconde paroi verticale (132) à l'extérieur du réflecteur (10), isolé du phare (5) et du feu de position (2R).

2. Lampe pour véhicule (4R) selon la revendication 1, **caractérisée en ce qu'**une unité de diffusion (21) qui diffuse la lumière depuis l'ampoule (11) pour le feu de position (2R), est disposée sur la surface de réflexion (20).

3. Lampe pour véhicule (4R) selon la revendication 2, **caractérisée en ce que** l'unité de diffusion (21) est constitué par plusieurs surfaces crantées (21).

4. Lampe pour véhicule (4R) selon la revendication 1, **caractérisée en ce que** la seconde paroi verticale (132) forme une partie en forme de barillet, une surface convexe étant dirigée vers le côté de la première paroi verticale (131), afin de diffuser - réfléchir la lumière provenant de l'ampoule (11) pour le feu de position (2R) sur la surface de réflexion (20).

5. Lampe pour véhicule (4R) selon la revendication 1, **caractérisée en ce que** la seconde paroi verticale (132) forme une partie en forme de barillet, une surface convexe étant dirigée vers le côté de la première paroi verticale (131), afin de diffuser - réfléchir la lumière provenant de l'ampoule (11) pour le feu de position (2R) sur la surface de réflexion (20), et
plusieurs surfaces crantées (21) sont disposées sur la surface de réflexion (20), pour diffuser davantage la lumière depuis l'ampoule (11) pour le feu de gabarit (2R).

6. Lampe pour véhicule (4R) selon au moins l'une des revendications 1 à 5, **caractérisée en ce que** le phare (5) peut être l'un d'un système à deux phares, un système à quatre phares, et un feu antibrouillard.
